# FASCICULE DE BREVET EUROPEEN

(11) **EP 3 237 243 B1**
(45) Date de publication et mention de la délivrance du brevet: **27.02.2019**
(21) Numéro de dépôt: 15805584.8
(22) Date de dépôt: 13.11.2015
(51) Int. Cl.: B60J 5/10

(54) **DISPOSITIF ANTI-BOURDONNEMENT POUR PORTE DE COFFRE**
BRUMMSCHUTZVORRICHTUNG FÜR GEPÄCKRAUMKLAPPE
ANTI-BUZZING DEVICE FOR LUGGAGE COMPARTMENT DOOR

(30) Priorité: 22.12.2014 FR 1463041
(43) Date de publication de la demande: 01.11.2017
(73) Titulaire: Renault s.a.s, 92100 Boulogne-Billancourt (FR)
(72) Inventeur: LEFEBVRE, Benjamin, 91470 Les Molieres (FR)
(86) Numéro de dépôt international: PCT/FR2015/053070
(87) Numéro de publication internationale: WO 2016/102791

(56) Documents cités:
- EP-A2- 2 463 132
- US-A- 6 019 418
- US-A1- 2011 179 719

## Description

La présente invention se rapporte à un dispositif anti-bourdonnement pour une porte de coffre. Le document US 2011/0179719 A1 est considéré comme l'état de la technique le plus proche de l'objet de la revendication 1.

En particulier, dans le domaine des véhicules automobiles à moteur à combustion interne, lorsque le moteur tourne au ralenti, par exemple à une fréquence autour de 30Hz, il provoque une excitation de la caisse et des ouvrants, et donc de la porte de coffre, dans les basses fréquences.

Si le mode propre de la porte de coffre est couplé à la fréquence d'excitation du moteur tournant au ralenti, alors cela génère un bruit appelé bourdonnement, qui constitue une gêne acoustique pour les passagers dans l'habitacle.

L'ouverture permettant le montage de la serrure de la porte de coffre est une zone relativement sensible aux bourdonnements. En effet, des découpes de la tôle favorisent les déformations structurelles produisant un bourdonnement.

Aussi il est relativement important de s'assurer du découplage du mode propre de la porte du coffre et de la fréquence du ralenti du moteur. C'est pourquoi on cherche à réaliser une porte de coffre dont le mode propre est supérieur à 30 Hz.

A cet effet on connait l'utilisation de plaques de tôles, appliquées contre la tôle de la porte de coffre, par exemple autour de l'ouverture pour recevoir la serrure, ces plaques de tôles étant sensiblement plus épaisses que la tôle constituant la porte de coffre.

De telles plaques de tôles apportent de la rigidité et augmentent ainsi le mode propre de la porte de coffre.

Cependant, pour augmenter suffisamment le mode propre de manière à le découpler du bourdonnement moteur, de telles plaques de tôles doivent être relativement étendues sur la surface de la porte de coffre, ce qui a tendance à alourdir la porte de coffre du véhicule.

Aussi, il existe le besoin d'un dispositif anti-bourdonnement pour une porte de coffre améliorée et un respect du cahier des charges acoustique.

Dans le but de résoudre ce problème, la présente invention propose un dispositif anti-bourdonnement pour une porte de coffre d'un véhicule automobile, ladite porte comportant un caisson recouvert par au moins une pièce extérieure de carrosserie agencée au recouvrement de la face extérieure de la porte de coffre, ladite porte de coffre comprenant une ouverture conformée pour introduire une serrure lors de son montage dans la porte, ledit dispositif anti-bourdonnement comprenant au moins un élément de renfort apte à être disposé à proximité de ladite ouverture.

Ledit au moins un élément de renfort comprend une première face de fixation et une deuxième face de fixation, conformées pour être solidarisées à ladite porte de coffre, et une face de rigidification solidaire de la première face de fixation et de la deuxième face de fixation, ladite face de rigidification s'étendant dans un plan sensiblement perpendiculaire aux plans des faces de fixation, l'élément de renfort étant espacé de la pièce extérieure de carrosserie de sorte que cette dernière est apte à se déformer lorsqu'un effort est appliqué au droit de l'élément de renfort.

Ainsi, la face de rigidification rigidifie la fixation des faces de fixation sur la porte de coffre, ce qui permet l'atténuation du bourdonnement de ladite porte de coffre à proximité de ladite ouverture pour recevoir ladite serrure.

L'élément de renfort réalise en tout autonomie la fonction anti-bourdonnement sans recours à la pièce extérieure de carrosserie. C'est la raison pour laquelle chaque élément de renfort est espacé de la pièce extérieure de carrosserie.

De cette manière, on peut obtenir un dispositif anti-bourdonnement relativement léger, le dispositif ne nécessitant que peu de matière supplémentaire pour découpler le mode propre de la porte de coffre de la fréquence du moteur au ralenti.

Avantageusement et de manière non limitative, chaque face parmi la première face de fixation, la deuxième face de fixation et la face de rigidification s'étend dans un plan sensiblement perpendiculaire au plan des deux autres faces. Ainsi on peut obtenir un élément de renfort particulièrement rigide.

Avantageusement et de manière non limitative, le dispositif anti-bourdonnement comprend deux éléments de renforts, aptes à être disposés de chaque côté de ladite ouverture dans la direction transversale de la porte de coffre.

Les faiblesses structurelles, en particulier les fines couches de tôles, favorisant le bourdonnement de la porte de coffre, étant principalement localisées sur les bords latéraux de l'ouverture, on obtient ainsi un dispositif anti-bourdonnement relativement efficace sur chaque bord latéral de l'ouverture.

Avantageusement et de manière non limitative, les deux éléments de renfort sont reliés l'un à l'autre par une face de protection, apte à s'étendre dans un plan sensiblement parallèle à un plan dans lequel s'étend l'ouverture. Ainsi on augmente la rigidité des éléments de renfort, ce qui augmente encore la valeur du mode propre de la porte de coffre et améliore ainsi le dispositif anti-bourdonnement.

Avantageusement et de manière non limitative, la face de protection comprend à chacune de ses extrémités solidaires des éléments de renfort, deux nervures s'étendant dans une direction sensiblement transversale, de manière à apporter une rigidité transversale au dispositif anti-bourdonnement.

Les nervures apportent ainsi une rigidité supplémentaire à la face de protection, en particulier relativement à des efforts produits dans une direction normale à la face de protection.

Avantageusement et de manière non limitative, la face de protection est apte à s'interposer entre l'ouverture permettant le montage de la serrure et un bandeau de porte, de manière à interdire l'accès à la serrure depuis une ouverture pratiquée dans ledit bandeau de porte. Ainsi la face de protection agit comme une sécurité antivol pour la porte de coffre.

L'invention se rapporte aussi à une porte de coffre d'un véhicule automobile comprenant un dispositif anti-bourdonnement tel que décrit précédemment.

Avantageusement et de manière non limitative, la porte de coffre comprend près du bord latéral de l'ouverture une surface emboutie en forme de colonne sensiblement verticale, ladite surface emboutie étant conformée pour recevoir une première face de fixation d'un élément de renfort du dispositif anti-bourdonnement.

Ainsi la tôle est rigidifiée par la colonne, et la face de fixation peut être facilement fixée sur la porte. Aussi le dispositif anti-bourdonnement est simple à monter sur le véhicule automobile et les qualités anti-bourdonnement sont améliorées.

L'invention se rapporte aussi à un véhicule automobile comprenant une porte de coffre telle que décrite précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est une vue en perspective d'une porte arrière d'un véhicule automobile comprenant un renfort anti-bourdonnement selon un mode de réalisation de l'invention ; et
- la figure 2 est une vue en perspective d'un renfort anti-bourdonnement selon le mode de réalisation de la figure 1.

Dans la présente description, les termes avant, arrière, supérieur, inférieur, font référence aux directions avant et arrière du véhicule, lorsque la porte de coffre est montée sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

Un véhicule automobile comprend une porte de coffre 1, ici en tôle, présentant une face intérieure 1c destinée à être orientée vers l'intérieur de l'habitacle du véhicule automobile et une face extérieure 1d opposée à la face intérieure 1c.

La porte de coffre 1 est formée d'une partie haute 1a destinée à recevoir la lunette arrière, et une partie basse 1b.

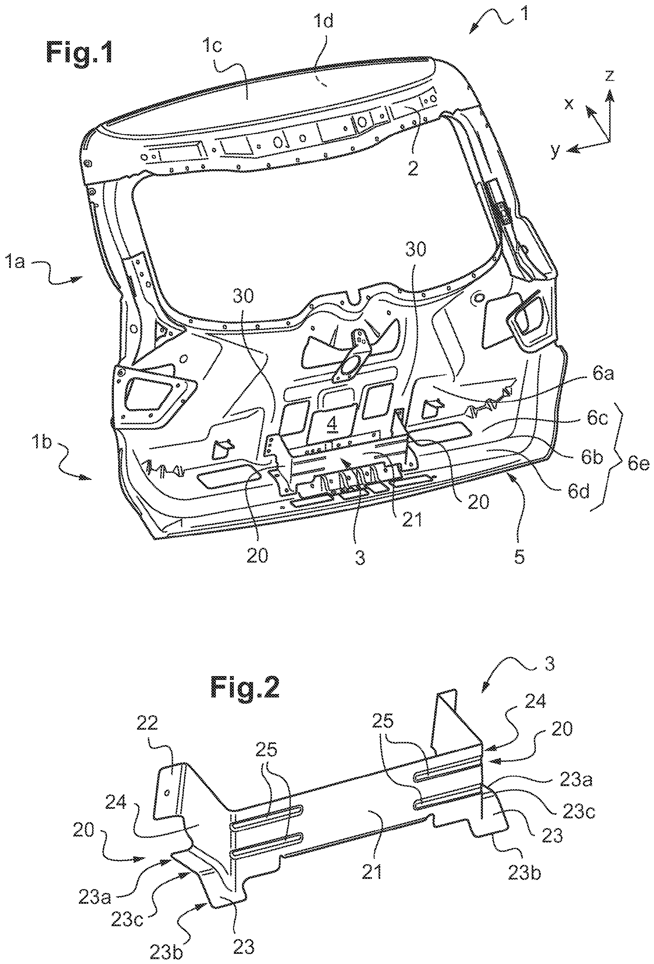

La porte de coffre 1 telle que rendue visible sur la figure 1 est un caisson de porte qui est destiné à recevoir par superposition une pièce de carrosserie venant ainsi à recouvrement de tout ou partie de la partie basse 1b de la face extérieure 1d. Un tel caisson est aussi conçu afin de recevoir par superposition une garniture intérieure venant à recouvrement de tout ou partie de la face intérieure 1c.

La partie basse 1b de la porte 1 comprend de haut en bas, lorsque la porte de coffre 1 est montée dans le véhicule automobile, un pan vertical 6a, un pan intermédiaire 6e et un bandeau de porte 5 s'étendant vers l'avant du véhicule automobile, destiné à recevoir les éclairages des plaques d'immatriculation et les éléments de déverrouillage de la porte 1.

Le pan vertical 6a définit une ouverture 4 pour recevoir une serrure de fermeture de la porte 1.

Le pan vertical 6a descend jusqu'au pan intermédiaire 6e.

Le pan vertical 6a présente aussi deux surfaces embouties 30, en forme de nervures30, disposées à proximité des bords latéraux de l'ouverture 4. Autrement dit les colonnes 30 sont disposées de chaque côté de l'ouverture 4 selon la direction transversale de la porte de coffre 1.

Les colonnes 30 sont bombées, vue de la face intérieure 1c de la porte de coffre 1, et définissent un sommet plan, en forme de langue verticale, adapté pour faciliter la soudure d'éléments sur la porte de coffre 1, ici pour recevoir la première face de fixation 22 décrite ci-après. Autrement dit, les colonnes 30 comprennent une face plane s'étendant sensiblement dans un plan transversal vertical, sur tout la hauteur de la colonne 30, cette face plan étant adapté pour faciliter la soudure d'éléments sur la porte de coffre 1.

Le pan intermédiaire 6e s'étend dans la largeur de la porte 1.

Le pan intermédiaire 6e présente une portion supérieure 6c sensiblement horizontale, une portion inférieure 6d sensiblement verticale et une portion courbe 6b joignant la portion supérieure 6c à la portion inférieure 6d de forme sensiblement convexe vu de la face intérieure 1c.

Le pan intermédiaire 6e solidarisant le pan vertical 6a au bandeau de porte 5 qui s'étend dans un plan sensiblement longitudinal transversal.

Un dispositif anti-bourdonnement 3 est disposé sur la face intérieure 1c de la porte de coffre 1, dans la partie basse 1b de la porte de coffre 1.

Le dispositif anti-bourdonnement 3 comprend préférentiellement deux éléments de renfort 20.

Les deux éléments de renfort 20 sont disposés de part et d'autre de l'ouverture 4 selon la direction transversale, à proximité de l'ouverture 4 ; chacun des éléments de renfort 20 étant disposés de part et d'autre de chaque côté latéral de l'ouverture 4.

On comprendra par le terme « à proximité de l'ouverture 4 » qu'un élément de renfort 20 est éloigné transversalement de l'ouverture 4 de moins du quart de la largeur de la porte 1, et avantageusement de moins d'un sixième de la largeur de la porte 1.

Chaque élément de renfort 20 comprend une première face de fixation 22, une deuxième face de fixation 23 et une face de rigidification 24.

La première face de fixation 22 présente une forme sensiblement rectangulaire, s'étendant dans un plan vertical transversal et étant solidarisée préférentiellement par soudure sur le pan vertical 6a de la partie basse 1b de la porte 1.

Comme décrit précédemment la première face de fixation 22 est préférentiellement soudée sur la langue verticale des colonnes 30 du pan vertical 6a.

La deuxième face de fixation 23 présente une forme rectangulaire et définit une première extrémité 23a s'étendant dans un plan sensiblement transversal longitudinal, une deuxième extrémité 23b s'étendant dans un plan sensiblement vertical transversal et une portion courbe 23c s'étendant dans une direction transversale, et joignant la première extrémité 23a à la deuxième extrémité 23b, dont la courbure est sensiblement complémentaire de la courbure du pan intermédiaire 6e de la partie basse 1b de la porte 1.

La deuxième face de fixation 23 est ainsi conformée pour être solidarisée sur le pan intermédiaire 6e de la partie basse 1b de la porte de coffre 1, par exemple par soudure.

La face de rigidification 24 présente une forme sensiblement rectangulaire, et s'étend dans un plan sensiblement longitudinal vertical.

Autrement dit, la face de rigidification 24 s'étend dans un plan perpendiculaire au plan vertical transversal dans lequel s'étend la première face de fixation 22 et au plan transversal longitudinal dans lequel s'étend la première extrémité de la deuxième face de fixation 23.

La face de rigidification 24 permet ainsi de rigidifier la tôle autour des deux faces de fixation 22, 23 en les maintenant l'une et l'autre en place.

Autrement dit, les efforts appliqués sur l'une des deux faces de fixation 22, 23 sont partiellement absorbés par l'autre via la face de rigidification 24.

En particulier, lorsque le moteur du véhicule automobile tourne au ralenti, la tôle à proximité de l'ouverture 4 est plus sensible aux vibrations produites. Aussi, la première face de fixation 22 solidaire de la porte, et transmettant les efforts de vibrations produits à la deuxième face de fixation 23 via la face de rigidification 24 atténuera de manière relativement bonne les vibrations de bourdonnement produites.

Du fait que deux éléments de renfort 20 sont disposés de part et d'autre de l'ouverture 4, le bourdonnement est encore mieux atténué.

Chaque élément de renfort 20 assemblé à la porte de coffre est disposé de manière écartée en X de la pièce de carrosserie qui est apte à être agencée à recouvrement de la face extérieure 1d de la porte de coffre 1 afin de ne pas créer un point dur. Du fait de cet écart en X, la pièce de carrosserie est apte à se déformer lorsqu'un effort est appliqué au droit d'un élément de renfort 20.

Une face de protection 21, ici en tôle, s'étend dans un plan sensiblement vertical transversal, et solidarise les deux éléments de renfort 20. Cette face de protection 21 apporte une rigidité supplémentaire aux éléments de renfort 20.

Autrement dit, la face de protection 21 s'étend dans un plan sensiblement parallèle au plan dans lequel est définie l'ouverture.

A l'identique de chaque élément de renfort 20, la face de protection 21 est écarté en X de la pièce de carrosserie qui est destinée à venir à recouvrement de la porte de coffre 1.

Chaque extrémité latérale de la face de protection 21 est solidaire au moins en partie de la face de rigidification 24 de chaque élément de renfort 20.

La face de protection 21 s'étend sur une hauteur sensiblement comparable à la face de rigidification 24.

Par exemple et de façon non limitative, la face de protection 21 s'étend sur une hauteur de 5 cm à 15 cm.

La face de protection 21 interdit ainsi d'accéder à l'ouverture 4 destinée à recevoir la serrure en passant par une ouverture du bandeau de porte, par exemple en démontant les éclairages de plaque d'immatriculation,. De cette manière la face de protection 21 agit comme un antivol.

La face de protection 21 comprend des nervures 25, ici quatre nervures 25, s'étendant dans une direction sensiblement transversale, et débouchant sur des bords latéraux de la face de protection 21 solidaires des faces de rigidification 24 respectives de chaque élément de renfort 20.

Chaque bord latéral de la face de protection 21 comprend deux nervures 25 réparties de manière sensiblement régulières sur la hauteur de la face de protection 21.

Les nervures 25 s'étendent transversalement sur une partie de la largeur de la face de protection 21, ici sur environ un tiers de la largeur de la face de protection 21.

Ainsi les nervures 25 permettent à la face de protection 21 d'agir comme une barre anti-rapprochement, ce qui ajoute aux qualités antivol du dispositif.

## Revendications

1. Dispositif anti-bourdonnement (3) pour une porte de coffre (1) d'un véhicule automobile, ladite porte comportant un caisson recouvert par au moins une pièce extérieure de carrosserie agencée au recouvrement de la face extérieure (1d) de la porte de coffre, ladite porte de coffre (1) comprenant une ouverture (4) conformée pour introduire une serrure lors de son montage à l'intérieur de la porte, ledit dispositif anti-bourdonnement (3) comprenant au moins un élément de renfort (20) apte à être disposé à proximité de ladite ouverture (4), ledit au moins un élément de renfort (20) comprend une première face de fixation (22) et une deuxième face de fixation (23), conformées pour être solidarisées à ladite porte de coffre (1), et une face de rigidification (24) solidaire de la première (22) face de fixation et de la deuxième (23) face de fixation, ladite face de rigidification (24) s'étendant dans un plan sensiblement perpendiculaire aux plans des faces de fixation (22, 23), **caractérisé en ce que** l'élément de renfort (20) est espacé de la pièce extérieure de carrosserie de sorte que cette dernière est apte à se déformer lorsqu'un effort est appliqué au droit de l'élément de renfort (20).

2. Dispositif anti-bourdonnement (3), selon la revendication 1, **caractérisé en ce que** chaque face (22, 23, 24) parmi la première face de fixation (22), la deuxième face de fixation (23) et la face de rigidification (24) s'étend dans un plan sensiblement perpendiculaire au plan des deux autres faces (22, 23, 24).

3. Dispositif anti-bourdonnement (3), selon l'une quelconque des revendications 1 ou 2, **caractérisé en ce qu'**il comprend deux éléments de renforts (20), aptes à être disposés de chaque côté de ladite ouverture (4) dans la direction transversale de la porte de coffre (1).

4. Dispositif anti-bourdonnement (3), selon la revendication 3, **caractérisé en ce que** les deux éléments de renfort (20) sont reliés l'un à l'autre par une face de protection (21), apte à s'étendre dans un plan sensiblement parallèle à un plan dans lequel s'étend l'ouverture (4).

5. Dispositif anti-bourdonnement (3), selon la revendication 4, **caractérisé en ce que** la face de protection (21) comprend à chacune de ses extrémités solidaires des éléments de renfort (20), deux nervures (25) s'étendant dans une direction sensiblement transversale, de manière à apporter une rigidité transversale au dispositif anti-bourdonnement (3).

6. Dispositif anti-bourdonnement (3), selon l'une quelconque des revendications 4 ou 5, **caractérisé en ce que** la face de protection (21) est apte à s'interposer entre l'ouverture (4) permettant le montage de la serrure et un bandeau de porte (5), de manière à interdire l'accès à la serrure depuis une ouverture pratiquée dans ledit bandeau de porte (5).

7. Porte de coffre (1) d'un véhicule automobile comprenant un dispositif anti-bourdonnement (3) selon l'une quelconque des revendications 1 à 6.

8. Porte de coffre (1), selon la revendication 7, **caractérisée en ce qu'**elle comprend près du bord latéral de l'ouverture (4) une surface emboutie (30) en forme de colonne sensiblement verticale, ladite surface emboutie (30) étant conformée pour recevoir une première face de fixation (22) d'un élément de renfort (20) du dispositif anti-bourdonnement (3).

9. Véhicule automobile comprenant une porte de coffre (1) selon l'une quelconque des revendications 7 ou 8.

## Patentansprüche

1. Brummschutzvorrichtung (3) für eine Gepäckraumklappe (1) eines Kraftfahrzeugs, wobei die Klappe eine Kassette umfasst, die mit mindestens einem Karosserieaußenteil bedeckt ist, das die Außenseite (1d) der Gepäckraumklappe bedeckend angeordnet ist, wobei die Gepäckraumklappe (1) eine Öffnung (4) umfasst, die ausgebildet ist, um ein Schloss bei ihrer Montage innerhalb der Klappe einzuführen, wobei die Brummschutzvorrichtung (3) mindestens ein Verstärkungselement (20) umfasst, das geeignet ist, in der Nähe der Öffnung (4) angeordnet zu sein, wobei das mindestens eine Verstärkungselement (20) eine erste Befestigungsfläche (22) und eine zweite Befestigungsfläche (23), die ausgebildet sind, um mit der Gepäckraumklappe (1) verbunden zu sein, und eine Versteifungsfläche (24) umfasst, die mit der ersten Befestigungsfläche (22) und der zweiten Befestigungsfläche (23) verbunden ist, wobei sich die Versteifungsfläche (24) in einer Ebene im Wesentlichen senkrecht auf die Ebenen der Befestigungsflächen (22, 23) erstreckt, **dadurch gekennzeichnet, dass** das Verstärkungselement (20) vom Karosserieaußenteil beabstandet ist, so dass dieses letztgenannte geeignet ist, sich zu verformen, wenn eine Kraft im rechten Winkel zum Verstärkungselement (20) angewandt wird.

2. Brummschutzvorrichtung (3) nach Anspruch 1, **dadurch gekennzeichnet, dass** sich jede Fläche (22, 23, 24) unter der ersten Befestigungsfläche (22), der zweiten Befestigungsfläche (23) und der Versteifungsfläche (24) in einer Ebene im Wesentlichen senkrecht auf die Ebene der zwei anderen Flächen (22, 23, 24) erstreckt.

3. Brummschutzvorrichtung (3) nach einem der Ansprüche 1 oder 2, **dadurch gekennzeichnet, dass** sie zwei Verstärkungselemente (20) umfasst, die geeignet sind, auf jeder Seite der Öffnung (4) in Querrichtung zur Gepäckraumklappe (1) angeordnet zu sein.

4. Brummschutzvorrichtung (3) nach Anspruch 3, **dadurch gekennzeichnet, dass** die zwei Verstärkungselemente (20) miteinander durch eine Schutzfläche (21) verbunden sind, die geeignet ist, sich in einer Ebene im Wesentlichen parallel zu einer Ebene zu erstrecken, in der sich die Öffnung (4) erstreckt.

5. Brummschutzvorrichtung (3) nach Anspruch 4, **dadurch gekennzeichnet, dass** die Schutzfläche (21) an jedem ihrer mit den Verstärkungselementen (20) verbundenen Enden zwei Rippen (25) umfasst, die sich im Wesentlichen in eine Querrichtung erstrecken, um der Brummschutzvorrichtung (3) eine Quersteifigkeit zu verleihen.

6. Brummschutzvorrichtung (3) nach einem der Ansprüche 4 oder 5, **dadurch gekennzeichnet, dass** die Schutzfläche (21) geeignet ist, zwischen der Öffnung (4), die die Montage des Schlosses ermöglicht, und einem Türband (5) zwischengefügt zu sein, um den Zugang zum Schloss von einer in dem Türband (5) vorgesehenen Öffnung zu verhindern.

7. Gepäckraumklappe (1) eines Kraftfahrzeugs, umfassend eine Brummschutzvorrichtung (3) nach einem der Ansprüche 1 bis 6.

8. Gepäckraumklappe (1) nach Anspruch 7, **dadurch gekennzeichnet, dass** sie nahe dem Seitenfand der Öffnung (4) eine in Form einer im Wesentlichen vertikalen Säule tiefgezogene Oberfläche (30) umfasst, wobei die tiefgezogene Oberfläche (30) ausgebildet ist, um eine erste Befestigungsfläche (22) eines Verstärkungselements (20) der Brummschutzvorrichtung (3) aufzunehmen.

9. Kraftfahrzeug, umfassend eine Gepäckraumklappe (1) nach einem der Ansprüche 7 oder 8.

## Claims

1. Anti-buzzing device (3) for a luggage compartment door (1) of a motor vehicle, said door comprising a box section covered by at least one outer piece of bodywork arranged covering the outer face (1d) of the luggage compartment door, said luggage compartment door (1) comprising an opening (4) shaped for introduction of a lock when mounted on the interior of the door, said anti-buzzing device (3) comprising at least one reinforcing element (20) able to be arranged close to said opening (4), said at least one reinforcing element (20) comprising a first fixing face (22) and a second fixing face (23) shaped to be secured to said luggage compartment door (1), and a stiffening face (24) secured to the first fixing face (22) and the second fixing face (23), said stiffening face (24) extending in a plane substantially perpendicular to the planes of the fixing faces (22, 23), **characterized in that** the reinforcing element (20) is spaced from the outer piece of bodywork such that the latter is able to deform when a force is applied at the level of a reinforcing element (20).

2. Anti-buzzing device (3) according to Claim 1, **characterized in that** each face (22, 23, 24) of the first fixing face (22), the second fixing face (23) and the stiffening face (24), extends in a plane substantially perpendicular to the plane of the other two faces (22, 23, 24).

3. Anti-buzzing device (3) according to either of Claims 1 and 2, **characterized in that** it comprises two reinforcing elements (20) able to be arranged on either side of said opening (4) in the transverse direction of the luggage compartment door (1).

4. Anti-buzzing device (3) according to Claim 3, **characterized in that** the two reinforcing elements (20) are connected together by a protection face (21) able to extend in a plane substantially parallel to a plane in which the opening (4) extends.

5. Anti-buzzing device (3) according to Claim 4, **characterized in that** the protection face (21) comprises, at each of its ends secured to the reinforcing elements (20), two ribs (25) extending in a substantially transverse direction so as to provide a transverse rigidity for the anti-buzzing device (3).

6. Anti-buzzing device (3) according to either of Claims 4 and 5, **characterized in that** the protection face (21) is able to be interposed between the opening (4) allowing mounting of the lock and a door edge strip (5), so as to prevent access to the lock from an opening made in said door edge strip (5).

7. Luggage compartment door (1) of a motor vehicle comprising an anti-buzzing device (3) according to any of Claims 1 to 6.

8. Luggage compartment door (1) according to Claim 7, **characterized in that** it comprises, close to the lateral edge of the opening (4), a stamped surface (30) in the form of a substantially vertical column, said stamped surface (30) being shaped to receive a first fixing face (22) of a reinforcing element (20) of the anti-buzzing device (3).

9. Motor vehicle comprising a luggage compartment door (1) according to either of Claims 7 and 8.
